# EUROPÄISCHE PATENTSCHRIFT

(11) **EP 2 756 974 B1**
(45) Veröffentlichungstag und Bekanntmachung des Hinweises auf die Patenterteilung: **17.04.2019**
(21) Anmeldenummer: 13195299.6
(22) Anmeldetag: 02.12.2013
(51) Int. Cl.: B60H 1/00, B60H 1/03

(54) **KRAFTFAHRZEUG MIT EINEM EINER FAHRERKABINE ZUGEORDNETEN HEIZWÄRMETAUSCHER**
MOTOR VEHICLE WITH A DRIVER'S CAB WITH HEAT EXCHANGER
VÉHICULE AUTOMOBILE DOTÉ D'UN ÉCHANGEUR DE CHALEUR ASSOCIÉ À UNE CABINE DE CONDUCTEUR

(30) Priorität: 17.01.2013 DE 202013100229 U
(43) Veröffentlichungstag der Anmeldung: 23.07.2014
(73) Patentinhaber: Müller, Claus, 55546 Volxheim (DE)
(72) Erfinder: Müller, Claus, 55546 Volxheim (DE)
(74) Vertreter: Müller, Jochen

(56) Entgegenhaltungen:
- DE-A1- 4 324 371
- DE-C1- 4 229 608
- DE-C1- 4 315 379
- DE-C1- 10 024 448
- DE-U1- 9 213 904
- DE-U1-202004 003 914

## Beschreibung

Die Erfindung bezieht sich auf ein Kraftfahrzeug mit einem einer Fahrerkabine zugeordneten Heizungskühler, der mit einem Kühlmittelkreislauf eines Motors verbunden ist, an den ein Wärmetauscher über eine Zuleitung und eine Ableitung angeschlossen ist, wobei der Wärmetauscher mit einem Heizungskreislauf eines Aufenthaltsbereichs gekoppelt ist, der an eine bei ausgeschaltetem Motor betreibbare Wärmequelle angeschlossen ist nach dem Oberbegriff des Anspruchs 1 und ein Nachrüstset dazu.

Ein mit einem Verbrennungsmotor ausgestattetes Kraftfahrzeug umfasst einen Kühlmittelkreislauf, dem ein Wärmetauscher für eine Heizung eines Innenraumes, beispielsweise einer Fahrerkabine, zugeordnet ist, wobei das flüssige Kühlmittel über den Wärmetauscher, vorzugsweise einen Heizungskühler, in bekannter weise Wärme an Luft abgibt, die insbesondere mittels eines Ventilators in den Innenraum geleitet wird. Um einen Wohn- oder Aufenthaltsbereich eines als Lastkraftwagen oder Wohnmobil ausgebildeten Kraftfahrzeugs zu heizen, ist es bekannt, entweder den Verbrennungsmotor zu betreiben, um die nötige Wärme zu erzeugen, was mit einem hohen Kraftstoffverbrauch verbunden ist, oder eine separate und bei Stillstand des Verbrennungs- bzw. Antriebsmotors zu betreibende Heizung zu installieren, deren Flüssigkeitskreislauf an über Wärmetauscher Wärme an die Umgebung abgibt und von einer separaten Wärmequelle, insbesondere durch einen Gasbrenner, gespeist ist. Zum gleichzeitigen Heizen des Wohnbereichs und der Fahrerkabine, insbesondere um Scheiben der Fahrerkabine vor dem Beginn einer Fahrt von Feuchtigkeit und/oder Eis zu befreien, wird nach dem Stand der Technik der Kühlmittelkreislauf des Verbrennungsmotors mit dem Flüssigkeitskreislauf der von der separaten Wärmequelle gespeisten Heizung in Strömungsverbindung gebracht, wobei die Wärmequelle nunmehr den Kühlmittelkreislauf und den Flüssigkeitskreislauf heizt. Hierbei wird auch der komplette Verbrennungsmotor erwärmt, weshalb eine relativ große Wärmemenge zunächst an den Verbrennungsmotor und anschließend an die Umgebung abgegeben wird, bis Wärme für die Fahrerkabine und den Wohn- bzw. Aufenthaltsbereich zur Verfügung steht.

Im Rahmen der vorliegenden Erfindung wird der Begriff Aufenthaltsbereich gleichermaßen für Wohn- und/oder Schlafbereich genutzt. Die Fahrerkabine ist mehr oder weniger von dem Aufenthaltsbereich getrennt, kann aber selbstverständlich auch Teil des Aufenthaltsbereichs sein. Der Motor zum Antrieb des Kraftfahrzeuges ist zwar in der Regel ein Verbrennungsmotor, andere wärmeerzeugende Motoren oder Quellen, die während der Fahrt Wärme erzeugen und entsprechend gekühlt werden, sind selbstverständlich gleichwirkend. Eine separate Wärmequelle für den Aufenthaltsbereich ist zwar oftmals ein Gasbrenner, andere Wärmequellen, die mit Strom, einem Fest- oder Flüssigbrennstoff gespeist werden, sind jedoch nicht ausgeschlossen.

Die DE 20 2004 003 914 U1 offenbart ein Heizsystem für ein Reisemobil bei dem mit einer Warmluftheizung nicht nur ein Luftstrom, sondern auch ein Fluid zu erwärmen ist, wobei der Luftstrom zum Beheizen des Luftraums und das Fluid zum Erwärmen von Brauchwasser oder einer als Fußbodenheizung ausgebildeten Warmwasserheizung oder zum Vorheizen des Kühlmittelkreislaufs eines Verbrennungsmotors dient.

Im Weiteren beschreibt die DE 100 24 448 C1 ein Verfahren zum Steuern eines Heizwasserkreislaufs in einem Fahrzeug, bei dem ein Zusatzheizgerät zusammen mit einem Wärmetauscher in einem ersten Wasserkreislauf unter Ausschluss des Fahrzeugmotors oder einem zweiten Wasserkreislauf unter Einschluss des Fahrzeugmotors mit Hilfe einer die Wasserkreisläufe bestimmenden Ventileinrichtung betrieben wird, wobei die Ventileinrichtung in Abhängigkeit von der gemessenen Temperatur des Wassers im Heizkreislauf gesteuert wird.

Darüber hinaus zeigt die DE 92 13 904 U1 die Anordnung einer Standheizung in einem Kühlmittelkreislauf eines Kraftfahrzeugs.

Der Erfindung liegt die Aufgabe zugrunde, ein Kraftfahrzeug der eingangs genannten Art zu schaffen, das bzw. der eine flexible und effiziente Beheizung eines einen Aufenthalts- und einen Fahrerbereich aufweisenden Kraftfahrzeuges ermöglicht und dabei einen relativ einfachen Aufbau aufweist sowie schnell und ohne große Veränderungen des Kraftfahrzeuges installierbar ist. Erfindungsgemäß wird die Aufgabe durch die Merkmale der unabhängigen Ansprüche gelöst.

Die Unteransprüche stellen vorteilhafte Ausgestaltungen der Erfindung dar.

Bei einem Kraftfahrzeug mit einem einer Fahrerkabine zugeordneten Heizungskühler, der mit einem eine Kühlmittelpumpe aufweisenden Kühlmittelkreislauf eines Motors verbunden ist, wobei dem Heizungskühler ein Heizungslüfter zugeordnet ist und an den Kühlmittelkreislauf ein Wärmetauscher über eine Zuleitung und eine Ableitung angeschlossen ist, wobei der Wärmetauscher mit einem Wasser durchströmten Heizungskreislauf eines Aufenthaltsbereichs gekoppelt ist, der an eine bei ausgeschaltetem Motor betreibbare Wärmequelle, die als Gasbrenner ausgebildet ist, angeschlossen ist, , sind in den Heizungskreislauf eine Heizungspumpe und mindestens ein Heizkörper zur Wärmeübertragung eingesetzt, und in den Kühlmittelkreislauf ist ein Absperrventil eingesetzt, das einen Durchfluss durch den Motor freigibt oder sperrt. Ein Elektromodul ist zum einen mit einer Starterbatterie und einer Zweit-Batterie und zum anderen mit dem elektrisch betätigbaren Stellventil und einer in die Zuleitung eingesetzten Umwälzpumpe gekoppelt, wobei das Elektromodul mit dem Heizungslüfter verbunden ist, der im Betrieb einen Warmluftstrom zur Erwärmung der Fahrerkabine erzeugt, wobei mit dem Elektromodul der Heizungslüfter ein- oder ausschaltbar und dessen Drehzahl regulierbar ist.

Die Unteransprüche stellen vorteilhafte Ausgestaltungen der Erfindung dar.

Ein Kraftfahrzeug umfasst einen einer Fahrerkabine zugeordneten Heizungskühler, der mit einem Kühlmittelkreislauf eines Motors verbunden ist, an den ein Wärmetauscher über eine Zuleitung und eine Ableitung angeschlossen ist, wobei der Wärmetauscher mit einem Wasser durchströmten Heizungskreislauf eines Aufenthaltsbereichs, gekoppelt ist, der an eine bei ausgeschaltetem Motor betreibbare Wärmequelle, die als Gasbrenner ausgebildet ist, angeschlossen ist und in den Kühlmittelkreislauf ein Absperrventil eingesetzt ist, das einen Durchfluss durch den Motor freigibt oder sperrt. Ein Elektromodul ist zum einen mit einer Starterbatterie und einer Zweit-Batterie, die zur Energieversorgung von im Aufenthaltsbereich angeordneten Elektrogeräten im Stillstand des Motors dient sowie durch Kopplung mit einem öffentlichen Stromnetz und/oder einen fahrzeugseitigen Generator aufladbar ist, und zum anderen mit dem elektrisch betätigbaren Stellventil und einer Umwälzpumpe gekoppelt. Im Weiteren ist das Elektromodul mit einem Heizungslüfter verbunden, der im Betrieb einen Warmluftstrom zur Erwärmung der Fahrerkabine erzeugt, wobei mit dem Elektromodul der Heizungslüfter ein- oder ausschaltbar und dessen Drehzahl regulierbar ist.

Üblicherweise verfügt insbesondere ein Wohnmobil über eine Zweit-Batterie, um Elektrogeräte, wie Kühlschrank, Beleuchtung oder dergleichen, auch ohne einen Anschluss an ein externes Spannungsnetz mit elektrischer Energie zu versorgen.

Üblicherweise verfügt insbesondere ein Wohnmobil über eine Zweit-Batterie, um Elektrogeräte, wie Kühlschrank, Beleuchtung oder dergleichen, auch ohne einen Anschluss an ein externes Spannungsnetz mit elektrischer Energie zu versorgen.

Bei dem Heizungslüfter kann es sich um ein Standardbauteil einer Klima- und Lüftungsanlage des Kraftfahrzeuges oder um ein Zusatzbauteil handeln.

Das elektromagnetische oder mechanische Absperrventil ist derart in den Kühlmittelkreislauf eingesetzt, dass der Motor derart strömungstechnisch von dem Kühlmittelkreislauf abgekoppelt ist, dass es möglich ist, bei geschlossenem Absperrventil mit dem Heizungskreislauf des

Aufenthaltsbereichs, beispielsweise eines Wohnbereichs eines Wohnmobils, über den Wärmetauscher und den abgesperrten Teil des Kühlmittelkreislaufs, der mit dem Heizungskühler verbunden ist, die Fahrerkabine zu heizen, ohne dass über den bei geschlossenem Absperrventil strömungstechnisch von dem Kühlmittelkreislauf und dem Heizungskühler abgekoppelten Motor eine große Wärmemenge verloren geht. Hierdurch ist ein schnelles Heizen der Fahrerkabine mit der Heizung des Aufenthaltsbereichs, die zu einer Jahreszeit, in der die Fahrerkabine zu beheizen ist, ohnehin zum Heizen des Aufenthaltsbereichs in Betrieb ist, möglich, ohne den Motor des Kraftfahrzeugs zu starten. Hierdurch kann beispielsweise ein schnelles Entfrosten einer Windschutzscheibe erfolgen und der Fahrer findet in der Fahrerkabine eine angenehme Temperatur vor, wobei dies mit einem relativ geringen Energieverbrauch umweltfreundlich zu realisieren ist.

In Ausgestaltung ist das Absperrventil als ein Rückschlagventil ausgebildet, das bei einer ausgeschalteten Kühlmittelpumpe des Motors geschlossen und bei einer eingeschalteten Kühlmittelpumpe geöffnet ist. Bei der Kühlmittelpumpe handelt es sich um das in den Kühlmittelkreislauf eingesetzte Aggregat, das im Betrieb des Motors drehzahlabhängig angertrieben wird, um das Kühlmittel in dem Kühlmittelkreislauf durch den Kühler und den Heizungskühler des Kraftfahrzeug zu transportieren.

Vorzugsweise ist bei ausgeschaltetem Motor eine in einen Vorlauf des den Heizungskühler und den Wärmetauscher strömungstechnisch verbindenden Kühlmittelkreislaufs eingesetzte Umwälzpumpe eingeschaltet. Die Umwälzpumpe sorgt für eine Förderung des Kältemittels über den Wärmetauscher und den Heizungskühler bei geschlossenem Absperrventil. Aufgrund der von der Umwälzpumpe erzeugten Strömung des Kältemittels wird das Rückschlagventil, das beispielsweise als ein Kugel- oder Plattenventil ausgebildet ist, geschlossen. Die Umwälzpumpe ist derart gestaltet, dass in einem ausgeschalteten Betriebszustand eine Durchströmung des Kältemittels, das beispielsweise von der Kühlmittelpumpe umgewälzt wird, möglich ist. Durch das in eine zwischen dem Motor und dem Heizungskühler angeordnete Vorlaufleitung installierte Rückschlagventil ist bei ausgeschaltetem Motor derselbe strömungstechnisch vollständig abgekoppelt, so dass über den Motor keine von der Heizung bereitgestellte Wärmeenergie an die Umgebung abgegeben wird.

Alternativ ist das Absperrventil als ein elektrisch betätigbares Stellventil ausgebildet und steht mit einem Schalter in Verbindung, der innerhalb des Kraftfahrzeugs angeordnet und/oder als fernbedienbarer Schalter ausgebildet ist und eine entsprechende Sender- und eine Empfängereinheit umfasst und/oder temperaturgesteuert öffenbar und/oder schließbar ist. Der Schalter kann fest, beispielsweise in einem Armaturenbrett des als Wohnmobil ausgebildeten Kraftfahrzeugs installiert oder fernbedienbar sein, wozu er mit einer entsprechenden Sende- und Empfangseinheit, die auch in eine Schlüsselfernbedienung integriert sein kann, gekoppelt ist. Durch die Betätigung eines Fernbedienungsschalters ergeht ein Signal zum Öffnen und/oder Schließen des Absperrventils. Selbstverständlich kann diese Funktionalität auch Bestandteil eines Smartphone sein und die Kommunikation drahtlos im Nahbereich mittels bekannter Techniken, wie dem sogenannten Bluetooth-Standard oder der sogenannten NFC-Technik (near field communication) erfolgen. Das Stellventil kann zusätzlich oder alternativ temperaturgesteuert öffenbar und/oder schließbar sein. Mit einem als Drei-Wege-Ventil ausgebildeten Stellventil ist es möglich, die Strömung des Kühlmittels durch eine Querschnittsveränderung des Strömungsweges und damit die Temperatur in der Fahrerkabine bzw. den Volumenstrom durch den Kühlmittelkreislauf mit dem Heizungskreislauf des Aufenthaltsbereichs koppelnden Wärmetauscher zu verändern.

Bei einem geöffneten Stellventil ist sowohl die Vorwärmung des Motors bei eingeschalteter Wärmequelle für den Aufenthaltsbereich als auch eine Erwärmung des Aufenthaltsbereichs bei ausgeschalter Wärmequelle und laufendem Motor möglich.

Zweckmäßigerweise umfasst das Elektromodul die Empfängereinheit zur Fernbedienung des Stellventils und/oder der Umwälzpumpe und/oder ist mittels eines Hauptschalters von den Stromnetzen trennbar. Das Elektromodul stellt eine zentrale Baueinheit für eine Vielzahl von Funktionen dar und kann selbstverständlich auch weitere elektronische Bauteile, wie zum Beispiel eine Spannungsüberwachung für die angeschlossenen Batterien, umfassen.

Um dem Fahrer den Schaltzustand des Absperrventils optisch wahrnehmbar darzustellen, ist das Elektromodul mit einer Anzeigeeinrichtung, vorzugsweise im Armaturenbrett oder im Aufenthaltsbereich, gekoppelt. Selbstverständlich kann der Schaltzustand auch auf einem beliebigen Display, insbesondere eines Smartphone, dargestellt werden.

Um zeitgesteuert ein Vorwärmen der Fahrerkabine zu bewirken, umfasst zweckmäßigerweise das Elektromodul eine Zeitschaltung. Die mit dem Elektromodul verbundenen Elektrobauteile können beispielsweise zu einer bestimmten Uhrzeit in Betrieb genommen und/oder nach einer bestimmten, beispielsweise einstellbaren, Zeit und/oder Uhrzeit, ausgeschaltet werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von zwei Ausführungsbeispielen unter Bezugnahme auf die zugehörige Zeichnung näher erläutert.

Es zeigt:

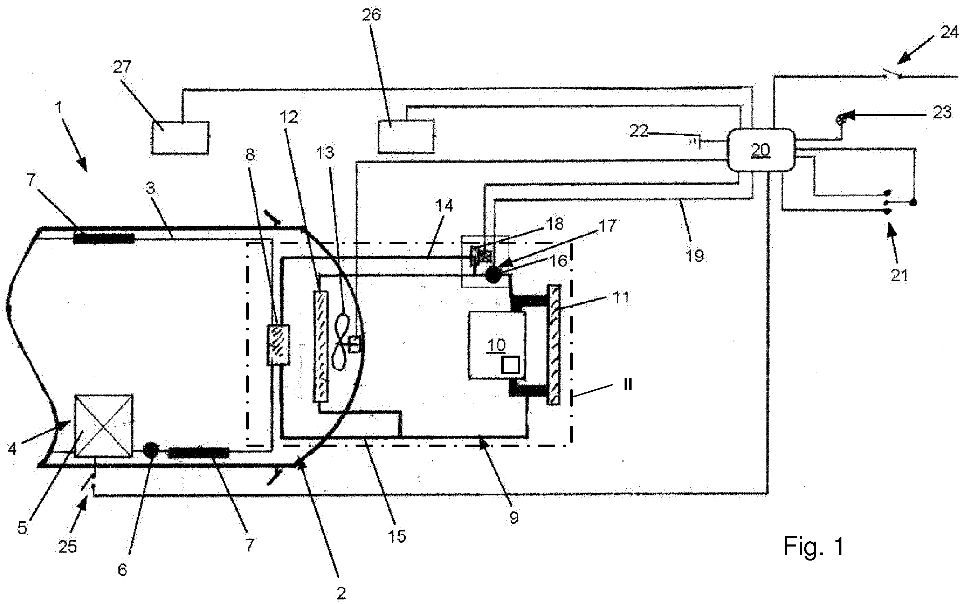

- Fig. 1:: eine schematische Teildarstellung der Erfindung.

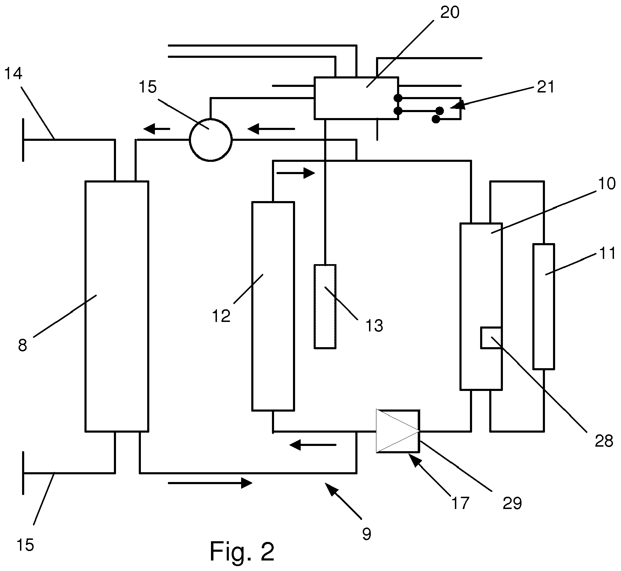

- Fig. 2:: eine schematische Teildarstellung eines ersten Zustandes der Erfindung in alternativer Ausgestaltung und

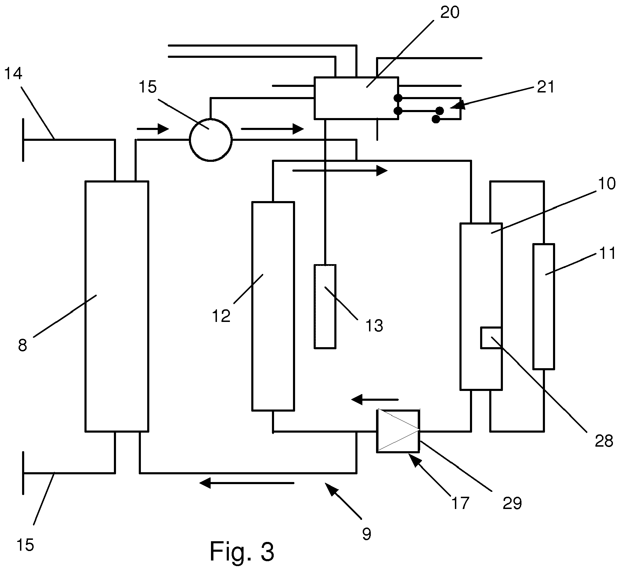

- Fig. 3:: eine schematische Teildarstellung eines zweiten Zustandes der Erfindung nach Fig. 2.

Ein als Wohnmobil ausgebildetes Kraftfahrzeug umfasst einen Aufenthaltsbereich 1 und eine Fahrerkabine 2, die räumlich sowohl ineinander übergehen als auch voneinander getrennt sein können. Der Aufenthaltsbereich 1 eines Wohnmobils kann auch als Wohnraum oder Wohnkabine bezeichnet werden. Bei einem Lastkraftwagen kann der Aufenthaltsbereich 1 beispielsweise eine Schlafkabine sein. In dem Aufenthaltsbereich 1 befindet sich zum Heizen ein Wasser aufweisender Heizungskreislauf 3, der mit einem im Stillstand des Wohnmobils betreibbaren Heizgerät 4 gekoppelt ist, das eine als Gasbrenner ausgebildete Wärmequelle 5 umfasst. In den Heizungskreislauf 3 sind eine Heizungspumpe 6 und mehrere Heizkörper 7 zur Wärmeübertragung eingesetzt. Im Weiteren befindet sich in dem Heizungskreislauf 3 ein Wärmetauscher 8, über den der Heizungskreislauf 3 mit einem Kühlmittelkreislauf 9 des Wohnmobils zu verbinden ist.

Der Kühlmittelkreislauf 9 dient in bekannter Weise zur Kühlung eines Motors 10 des Wohnmobils und umfasst einen Kühler 11 zum Wärmeaustausch mit Umgebungsluft bzw. Fahrtwind, wobei im Betrieb des Motors 10 eine Kühlmittelpumpe 28 das Kühlmittel in dem Kühlmittelkreislauf 9 umwälzt. Im Weiteren ist in den Kühlmittelkreislauf 9 ein Heizungskühler 12 mit einem zugeordneten Heizungslüfter 13 zur Beheizung der Fahrerkabine 2 mit der Abwärme des Motors 10 während der Fahrt eingesetzt. Eine Ringleitung des Kühlmittelkreislaufs 9, die den Heizungskühler 12 mit dem Motor 10 und dem Kühler 11 verbindet, ist über eine Zuleitung 14 einerseits und eine Ableitung 15 andererseits mit dem Wärmetauscher 8 strömungstechnisch verbunden. Ein Absperrventil 17 ist in unmittelbarer Nähe des Motors 10 in dem Kühlmittelkreislauf 9 installiert und in die Zuleitung 14 ist eine Umwälzpumpe 18 eingesetzt.

Das Absperrventil 17 ist als ein elektromechanisch verstellbares Stellventil 16 ausgebildet und steht über eine Anschlussleitung 19 mit einem Elektromodul 20 in Verbindung, das wiederum mit einem Schalter 21 zur Auswahl der Betriebsart und damit zur Betätigung des Stellventils 16 gekoppelt ist, wobei der Schalter 21 kabellos betätigbar sein kann. Beispielsweise ist über eine Funkfernbedienung, ein Smartphone oder dergleichen das Stellventil 16 zu schalten, um den Durchgang des Kühlmittelkreislaufs 9 freizugeben oder zu sperren, wobei erforderliche Empfängerbauteile dem an Masse 22 anliegenden Elektromodul 20 zugeordnet werden können, das auch mit der Umwälzpumpe 18 in Verbindung steht. Zur visuellen Darstellung der Betriebszustände der Heizungsanlage und damit des Stellventils 16 ist eine beispielsweise im Innenraum des Wohnmobils anzuordnende Anzeigeeinrichtung 23 an das Elektromodul 20 angeschlossen, das im Weiteren mit einem Zündanlassschalter 24 des Wohnmobils und einem, beispielsweise dem Heizgerät 4 zugeordneten, Heizungsschalter 25 in Verbindung steht. Zur Versorgung mit elektrischer Energie ist das Elektromodul 20 an eine Starterbatterie 26 und eine Zweit-Batterie 27 des Wohnmobils angeschlossen, wobei die Zweit-Batterie 27 vorzugsweise durch Kopplung mit einem öffentlichen Stromnetz und/oder einen fahrzeugseitigen Generator aufladbar ist. Die Starterbatterie 26 dient im Wesentlichen zur Energieversorgung während der Fahrt und die Zweit-Batterie 27 bei Stillstand des Wohnmobils.

In einem ersten Betriebszustand der Heizungsanlage befindet sich das Wohnmobil im Stillstand und durch die Wärmequelle 5 erwärmtes mittelkreislauf 9 installiert und in die Zuleitung 14 ist eine Umwälzpumpe 18 eingesetzt.

Das Absperrventil 17 ist als ein elektromechanisch verstellbares Stellventil 16 ausgebildet und steht über eine Anschlussleitung 19 mit einem Elektromodul 20 in Verbindung, das wiederum mit einem Schalter 21 zur Auswahl der Betriebsart und damit zur Betätigung des Stellventils 16 gekoppelt ist, wobei der Schalter 21 kabellos betätigbar sein kann. Beispielsweise ist über eine Funkfernbedienung, ein Smartphone oder dergleichen das Stellventil 16 zu schalten, um den Durchgang des Kühlmittelkreislaufs 9 freizugeben oder zu sperren, wobei erforderliche Empfängerbauteile dem an Masse 22 anliegenden Elektromodul 20 zugeordnet werden können, das auch mit der Umwälzpumpe 18 in Verbindung steht. Zur visuellen Darstellung der Betriebszustände der Heizungsanlage und damit des Stellventils 16 ist eine beispielsweise im Innenraum des Wohnmobils anzuordnende Anzeigeeinrichtung 23 an das Elektromodul 20 angeschlossen, das im Weiteren mit einem Zündanlassschalter 24 des Wohnmobils und einem, beispielsweise dem Heizgerät 4 zugeordneten, Heizungsschalter 25 in Verbindung. Zur Versorgung mit elektrischer Energie ist das Elektromodul 20 an eine Starterbatterie 26 und eine Zweit-Batterie 27 des Wohnmobils angeschlossen, wobei die Zweit-Batterie 27 vorzugsweise durch Kopplung mit einem öffentlichen Stromnetz und/oder einen fahrzeugseitigen Generator aufladbar ist. Die Starterbatterie 26 dient im Wesentlichen zur Energieversorgung während der Fahrt und die Zweit-Batterie 27 bei Stillstand des Wohnmobils.

In einem ersten Betriebszustand der Heizungsanlage befindet sich das Wohnmobil im Stillstand und durch die Wärmequelle 5 erwärmtes Wasser durchströmt den Heizungskreislauf 3, um den Aufenthaltsbereich 1 des Wohnmobils zu heizen. Hierbei ist die Heizungspumpe 6 eingeschaltet und die Umwälzpumpe 18 ausgeschaltet, sodass keine wesentliche Zirkulation von Kühlmittel durch den Wärmetauscher 8 erfolgt. Das als Rückschlagventil 29 oder als elektromechanisches Stellventil 16 ausgebildete Absperrventil 17 kann vorzugweise geschlossen sein, damit der über den Motor 10 und den Kühler 11 führende Abschnitt des Kühlmittelkreislaufes 9 strömungstechnisch blockiert ist. Die von der Wärmequelle 5 bereitgestellte Energie wird im Wesentlichen im Aufenthaltsbereich 1 genutzt.

Sind die Scheiben beschlagen oder gar vereist oder soll die Fahrerkabine 2 insgesamt im Stillstand des Wohnmobils, also im geparkten - abgestellten - Zustand, in dem der Motor 10 ausgeschaltet ist, relativ schnell beheizt werden, wird die Heizungsanlage durch entsprechendes Betätigen des Schalters 21 in einen zweiten Betriebszustand versetzt, wobei die Zweit-Batterie 27 die Energieversorgung übernimmt. In diesem zweiten Betriebszustand bleibt das Absperrventil 17 geschlossen und die Umwälzpumpe 18 wird in Betrieb genommen, damit das Kühlmittel durch die Zuleitung 14 in den Wärmetauscher 8, anschließend durch die Ableitung 15 in den Kühlmittelkreislauf 9 zu dem dort angeordneten Heizungskühler 12 gelangt, der gegebenenfalls mit Unterstützung des Heizungslüfters 13 für eine Warmluftzufuhr in der Fahrerkabine 2 sorgt, wobei die fahrzeugseitigen Lüftungskanäle genutzt werden. Das geschlossene Absperrventil 17 blockiert strömungstechnisch den Abschnitt des Kühlmittelkreislaufes 9, der über den Motor 10 und den Kühler 11 führt, weshalb eine Erwärmung des Motors 10 mittels der durch die Wärmequelle 5 bereitgestellten Energie nicht erfolgt. In einem dritten Betriebszustand kann das elektromechanische Stellventil 16 geöffnet werden, um bei einem Stillstand des Motors 10 und eingeschalteter Wärmequelle 5 den kompletten Kühlmittelkreislauf 9 mit dem im Wärmetauscher 8 erwärmten Kühlmittel zu durchströmen, wobei der Motor 10 vorgewärmt wird. Neben der Erwärmung des Motors 10 erfolgt, wie bereits erläutert, ein Heizen des Aufenthaltsbereichs 1 und der Fahrerkabine.

In einem vierten Betriebszustand der Heizungsanlage ist das Wohnmobil entweder zur Fahrt bereit oder fährt, wobei sich der Zündanlassschalter 24 in entsprechender Schaltstellung befindet. Die elektrische Spannungsversorgung erfolgt über die Starterbatterie 26 und ein entsprechendes Signal liegt an dem Elektromodul 20 an. Bei eingeschalteter Zündung ist das Absperrventil 17 in jedem Fall geöffnet, um eine übliche Kühlung des Motors 10 sicherzustellen.

Bei der Ausgestaltung des Absperrventils 17 als elektromechanisches Stellventil 16 wird dieses bei einer Betätigung des zugeordneten Schalters geöffnet. Bei einer Ausgestaltung des Absperrventils 17 als Rückschlagventil 29 wird dasselbe aufgrund der von der Kühlmittelpumpe 28 des Motors 10 erzeugten Strömung geöffnet. In beiden Fällen wird die Umwälzpumpe 18 ausgeschaltet, wobei die Umwälzpumpe derart ausgeführt ist, dass sie im ausgestalteten Zustand von Kühlmittel durchströmbar ist.

**Bezugszeichenliste**

| | | | |
|---|---|---|---|
| 1. | Aufenthaltsbereich | 16. | Stellventil |
| 2. | Fahrerkabine | 17. | Absperrventil |
| 3. | Heizungskreislauf | 18. | Umwälzpumpe |
| 4. | Heizgerät | 19. | Anschlussleitung |
| 5. | Wärmequelle | 20. | Elektromodul |
| 6. | Heizungspumpe | 21. | Schalter |
| 7. | Heizkörper | 22. | Masse |
| 8. | Wärmetauscher | 23. | Anzeigeeinrichtung |
| 9. | Kühlmittelkreislauf | 24. | Zündanlassschalter |
| 10. | Motor | 25. | Heizungsschalter |
| 11. | Kühler | 26. | Starterbatterie |
| 12. | Heizungskühler | 27. | Zweit-Batterie |
| 13. | Heizungslüfter | 28. | Kühlmittelpumpe |
| 14. | Zuleitung | 29. | Rückschlagventil |
| 15. | Ableitung | | |

## Patentansprüche

1. Kraftfahrzeug mit einem einer Fahrerkabine (2) zugeordneten Heizungskühler (12), der mit einem eine Kühlmittelpumpe (28) aufweisenden Kühlmittelkreislauf (9) eines Motors (10) verbunden ist, wobei dem Heizungskühler (12) ein Heizungslüfter (13) zugeordnet ist und an den Kühlmittelkreislauf (9) ein Wärmetauscher (8) über eine Zuleitung (14) und eine Ableitung (15) angeschlossen ist, wobei der Wärmetauscher (8) mit einem Wasser durchströmten Heizungskreislauf (3) eines Aufenthaltsbereichs (1), gekoppelt ist, der an eine bei ausgeschaltetem Motor (10) betreibbare Wärmequelle (5), die als Gasbrenner ausgebildet ist, angeschlossen ist, wobei in den Heizungskreislauf (3) eine Heizungspumpe (6) und mindestens ein Heizkörper (7) zur Wärmeübertragung eingesetzt sind, und in den Kühlmittelkreislauf (9) ein Absperrventil (17) eingesetzt ist, das einen Durchfluss durch den Motor (10) freigibt oder sperrt, **dadurch gekennzeichnet, dass** ein Elektromodul (20) zum einen mit einer Starterbatterie (26) und einer Zweit-Batterie (27) und zum anderen mit dem elektrisch betätigbaren Stellventil (16) und einer in die Zuleitung (14) eingesetzten Umwälzpumpe (18) gekoppelt ist, wobei das Elektromodul (20) mit dem Heizungslüfter (13) verbunden ist, der im Betrieb einen Warmluftstrom zur Erwärmung der Fahrerkabine (2) erzeugt, wobei mit dem Elektromodul (20) der Heizungslüfter (13) ein- oder ausschaltbar und dessen Drehzahl regulierbar ist.

2. Kraftfahrzeug nach Anspruch 1, **dadurch gekennzeichnet, dass** das Absperrventil (17) als ein Rückschlagventil (29) ausgebildet ist, das bei einer ausgeschalteten Kühlmittelpumpe (28) des Motors (9) geschlossen und bei einer eingeschalteten Kühlmittelpumpe (28) geöffnet ist.

3. Kraftfahrzeug nach Anspruch 1 oder 2, **dadurch gekennzeichnet, dass** bei ausgeschaltetem Motor (9) die in einen Vorlauf des den Heizungskühler (13) und den Wärmetauscher (8) strömungstechnisch verbindenden Kühlmittelkreislauf eingesetzte Umwälzpumpe (18) eingeschaltet ist.

4. Kraftfahrzeug nach Anspruch 1, **dadurch gekennzeichnet, dass** das Absperrventil (17) als ein elektrisch betätigbares Stellventil (17) ausgebildet ist und mit einem Schalter (21) in Verbindung steht, der innerhalb des Kraftfahrzeugs angeordnet und/oder als fernbedienbarer Schalter ausgebildet ist und eine entsprechende Sender- und eine Empfängereinheit umfasst und/oder temperaturgesteuert öffenbar und/oder schließbar ist.

5. Kraftfahrzeug nach einem der Ansprüche 1 bis 4, **dadurch gekennzeichnet, dass** das Elektromodul (20) die Empfängereinheit zur Fernbedienung des Stellventils (17) und/oder der Umwälzpumpe (18) umfasst und/oder mittels eines Hauptschalters von den Stromnetzen trennbar ist.

6. Kraftfahrzeug nach einem der Ansprüche 1 bis 5, **dadurch gekennzeichnet, dass** das Elektromodul (20) mit einer Anzeigeeinrichtung (23), vorzugsweise im Armaturenbrett oder im Aufenthaltsbereich (1), gekoppelt ist.

7. Kraftfahrzeug nach einem der Ansprüche 1 bis 6, **dadurch gekennzeich-net**, dass das Elektromodul (20) eine Zeitschaltung umfasst.

## Claims

1. Motor vehicle having a heating radiator (12) which is assigned to a driver's cab (2) and is connected to a coolant circuit (9), having a coolant pump (28), of an engine (10), wherein the heating radiator (12) is assigned a heating fan (13), and a heat exchanger (8) is connected to the coolant circuit (9) via a feed line (14) and a discharge line (15), wherein the heat exchanger (8) is coupled to a heating circuit (3), through which water flows, of a vehicle occupant region (1) which is connected to a heat source (5) which can be operated with the engine (10) switched off and which is embodied as a gas burner, wherein a heating pump (6) and at least one heating element (7) for transmitting heat are inserted into the heating circuit (3), and a shut-off valve (17), which clears or closes a passage through the engine (10) is inserted into the coolant circuit (9), **characterized in that** an electric module (20) is coupled, on the one hand to a starter battery (26) and a second battery (27) and, on the other hand, to the electrically activated actuating valve (16) and a circulation pump (18) which is inserted into the feed line (14), wherein the electric module (20) is connected to the heating fan (13) which generates during operation a flow of warm air for heating the driver's cab (2), wherein the heating fan (13) can be switched on and off, and its rotational speed can be regulated, with the electric module (20).

2. Motor vehicle according to Claim 1, **characterized in that** the shut-off valve (17) is embodied as a non-return valve (29) which is closed when a coolant pump (28) of the engine (9) is switched off, and is opened when a coolant pump (28) is switched on.

3. Motor vehicle according to Claim 1 or 2, **characterized in that** when the engine (9) is switched off, the circulation pump (18) which is inserted into a forerun of the coolant circuit which fluidically connects the heating radiator (13) and the heat exchanger (8) is switched on.

4. Motor vehicle according to Claim 1, **characterized in that** the shut-off valve (17) is embodied as an electrically activated actuating valve (17) and is connected to a switch (21) which is arranged inside the motor vehicle and/or is embodied as a remote-controlled switch and comprises a corresponding transceiver unit and/or can be opened and/or closed in a temperature-controlled fashion.

5. Motor vehicle according to one of Claims 1 to 4, **characterized in that** the electric module (20) comprises the receiver unit for performing remote control of the actuating valve (17) and/or of the circulation pump (18) and/or can be disconnected from the power systems by means of a mains switch.

6. Motor vehicle according to one of Claims 1 to 5, **characterized in that** the electric module (20) is coupled to a display apparatus (23), preferably on the dashboard or in the vehicle occupant region (1).

7. Motor vehicle according to one of Claims 1 to 6, **characterized in that** the electric module (20) comprises a time circuit.

## Revendications

1. Véhicule automobile comprenant un appareil de chauffage et refroidissement (12) associé à une cabine de conducteur (2), lequel est relié à un circuit de liquide de refroidissement (9) possédant une pompe à liquide de refroidissement (28) d'un moteur (10), un ventilateur de chauffage (13) étant associé à l'appareil de chauffage et refroidissement (12) et un échangeur de chaleur (8) étant raccordé au circuit de liquide de refroidissement (9) par le biais d'une conduite d'arrivée (14) et d'une conduite de départ (15), l'échangeur de chaleur (8) étant couplé à un circuit de chauffage (3), traversé par de l'eau, d'une zone de séjour (1), lequel est raccordé à une source de chaleur (5) réalisée sous la forme d'un brûleur à gaz et pouvant fonctionner lorsque le moteur (10) est arrêté, une pompe de chauffage (6) et au moins un radiateur de chauffage (7) étant utilisés dans le circuit de chauffage (3) pour la transmission de chaleur, et une vanne d'arrêt (17) étant installée dans le circuit de liquide de refroidissement (9), laquelle libère ou ferme un débit à travers le moteur (10), **caractérisé en ce qu'**un module électrique (20) est connecté d'une part à une batterie de démarreur (26) et à une deuxième batterie (27) et d'autre part à la vanne de réglage (16) pouvant être actionnée électriquement et à une pompe de circulation (18) installée dans la conduite d'arrivée (14), le module électrique (20) étant relié au ventilateur de chauffage (13) qui, en fonctionnement, produit un courant d'air chaud destiné à réchauffer la cabine de conducteur (2), le ventilateur de chauffage (13) pouvant être mis en marche ou arrêté et sa vitesse de rotation pouvant être régulée avec le module électrique (20).

2. Véhicule automobile selon la revendication 1, **caractérisé en ce que** la vanne d'arrêt (17) est réalisée sous la forme d'un clapet anti-retour (29) qui est fermé lorsque la pompe à liquide de refroidissement (28) du moteur (9) est à l'arrêt et ouvert lorsque la pompe à liquide de refroidissement (28) est en marche.

3. Véhicule automobile selon la revendication 1 ou 2, **caractérisé en ce que** lorsque le moteur (9) est à l'arrêt, la pompe de circulation (18) installée dans une arrivée du circuit de liquide de refroidissement qui relie fluidiquement le ventilateur de chauffage (13) et l'échangeur de chaleur (8) est mise en marche.

4. Véhicule automobile selon la revendication 1, **caractérisé en ce que** la vanne d'arrêt (17) est réalisée sous la forme d'une vanne de réglage (17) pouvant être actionnée électriquement et se trouve en liaison avec un commutateur (21) qui est disposé à l'intérieur du véhicule automobile et/ou qui est réalisé sous la forme d'un commutateur commandable à distance et comporte une unité d'émission et de réception correspondante et/ou dont l'ouverture et/ou la fermeture peuvent être commandée par la température.

5. Véhicule automobile selon l'une des revendications 1 à 4, **caractérisé en ce que** le module électrique (20) comporte l'unité de réception servant à la commande à distance de la vanne de réglage (17) et/ou de la pompe de circulation (18) et/ou peut être déconnecté des réseaux électriques au moyen d'un interrupteur général.

6. Véhicule automobile selon l'une des revendications 1 à 5, **caractérisé en ce que** le module électrique (20) est connecté à un dispositif d'affichage (23), de préférence dans le tableau de bord ou dans la zone de séjour (1).

7. Véhicule automobile selon l'une des revendications 1 à 6, **caractérisé en ce que** le module électrique (20) comporte un circuit de minuterie.
